# EUROPÄISCHE PATENTSCHRIFT

(11) **EP 2 438 017 B1**
(45) Veröffentlichungstag und Bekanntmachung des Hinweises auf die Patenterteilung: **30.03.2016**
(21) Anmeldenummer: 10722956.9
(22) Anmeldetag: 02.06.2010
(51) Int. Cl.: C02F 103/00, C02F 101/32, C02F 101/20, C02F 101/16, C02F 1/28, C02F 1/00, B01J 39/14, B01J 20/28, B01J 20/20, C02F 1/42, B01J 47/02

(54) **FILTERVORRICHTUNG ZUM REINIGEN VON MIT FESTSTOFFPARTIKELN UND/ODER GELÖSTEN SCHADSTOFFEN BELASTETEM WASSER**
FILTER DEVICE FOR CLEANING OF WATER POLLUTED WITH SOLID PARTICLES AND/OR DISSOLVED POLLUTANTS
DISPOSITIF FILTRANT POUR PURIFIER DE L'EAU CHARGÉE EN PARTICULES DE MATIÈRES SOLIDES ET/OU EN POLLUANTS DISSOUS

(30) Priorität: 05.06.2009 DE 102009024003
(43) Veröffentlichungstag der Anmeldung: 11.04.2012
(73) Patentinhaber: 3P Technik Filtersysteme GmbH, 73032 Donzdorf (DE); H2O Research GmbH, 48149 Münster (DE)
(72) Erfinder: TORRAS-PIQUE, Jorge, 73337 Bad Überkingen-Hausen (DE); DIERKES, Carsten, 48149 Münster (DE)
(74) Vertreter: Patentanwälte Magenbauer & Kollegen Partnerschaft mbB
(86) Internationale Anmeldenummer: PCT/EP2010/003358
(87) Internationale Veröffentlichungsnummer: WO 2010/139471

(56) Entgegenhaltungen:
- EP-A2- 1 967 657
- WO-A1-03/022745
- US-A- 6 085 911
- US-A1- 2005 181 931
- US-A1- 2007 246 419
- US-B1- 6 241 893

## Beschreibung

Die Erfindung betrifft eine Filtervorrichtung zum Reinigen von mit Feststoffpartikeln und/oder gelösten Schadstoffen belastetem Wasser, insbesondere Oberflächenwasser aus Straßen oder Dachabläufen, mit einem Gehäuse, das wenigstens einen Zulauf für verunreinigtes Wasser und wenigstens einen oberhalb des Zulaufs angeordneten Ablauf für gereinigtes Wasser aufweist, wobei im Gehäuse zwischen Zulauf und Ablauf eine Filtereinheit angeordnet ist, die von dem zu reinigenden Wasser im Aufstrom durchströmt wird, und wobei die Filtereinheit einen Ionenaustauscher enthält, der als synthetisches Molekularsieb ausgebildet ist.

Filtervorrichtungen zum Reinigen von belastetem Oberflächenwasser sind seit langem bekannt. Das Oberflächenwasser ist in der Regel von versiegelten Flächen abfließendes Regenwasser. Solche versiegelten Flächen sind beispielsweise Straßenbeläge, Parkflächen oder Lande- und Rollbahnen von Flughäfen, die durch Fahrzeuge aller Art stark frequentiert sind. Durch Brems- und Reifenabrieb sowie durch Katalysatorausstoß werden eine Reihe von Schadstoffen, insbesondere Schwermetalle, Öle und polyaromatische Kohlenwasserstoffe mit dem abfließenden Regenwasser mitgeschwemmt. Eine andere Problemzone sind Dächer, insbesondere Metalldächer, wobei das abfließende Regenwasser hier vor allem Schwermetalle aufnimmt, die dann als Schwermetall-Ionen in hydratisierter Form vorliegen. Derart mit Feststoffpartikeln und/oder gelösten Schadstoffen belastetes Wasser darf auf Grund verschiedener Verordnungen, beispielsweise Prüfwerte der Bundes-Bodenschutz- und Altlastenverordnung, nicht ohne vorherige Reinigung im Untergrund versickert werden oder anderweitig, beispielsweise als Brauchwasser, weiterverwendet werden.

Eine Filtervorrichtung zur Reinigung derart belasteten Wassers ist beispielsweise aus der DE 10 2004 042 390 A1 bekannt. Diese dort beschriebene Filtervorrichtung ist als Schachteinbau ausgestaltet und besitzt einen Hohlraum bildende Platten aus mehreren Segmenten, wobei der Hohlraum zum Einbringen eines Ionenaustauschers vorgesehen ist. Als Ionenaustauscher wird hier ein natürlicher Zeolith, insbesondere Klinoptilolith, Chabasith oder Phillipsit eingesetzt. Natürliche Zeolithe besitzen jedoch bezüglich Schwermetall-Ionen eine nur mäßige Sorptionskapazität, so dass vor allem bei stark belastetem Wasser eine unbefriedigende Reinigungswirkung erzielt wird.

Die WO 03/022745 A1 beschreibt einen Wasserfilter mit einem mit Filtermaterial gefüllten Kessel, der von zu reinigendem Wasser im Aufstrom durchströmt wird. Das Filtermaterial umfasst natürliche oder synthetische Zeolithe. Die Zeolithe sollen eine gleichbleibende Qualität besitzen, pur sein und eine Härte aufweisen, die eine zu schnelle Pulverisierung verhindert.

Die US 6,241,893 B1 beschreibt ein Wasserfiltermedium, das nichtkristallines Zeolith-Gel enthält.

Die US 2005/0181931 A1 betrifft ein Entfernungsmittel für Schwermetalle in Wasser, das einen synthetischen Zeolithen umfasst. Ein Zeolith vom Typ 13X wird gleichmäßig in einer Teilchengröße mit einem Durchmesser von 0,2-0,6 mm hergestellt.

Aufgabe der Erfindung ist es, eine Filtervorrichtung der eingangs erwähnten Art zu schaffen, die gegenüber den bekannten Filtervorrichtungen bessere Reinigungsergebnisse bei der Reinigung von mit Feststoffen und/oder gelösten Schadstoffen belastetem Wasser aufweist.

Diese Aufgabe wird durch eine Filtervorrichtung mit den Merkmalen des unabhängigen Anspruchs 1 gelöst. Weiterbildungen der Erfindung sind in den Unteransprüchen dargestellt.

Bei der erfindungsgemäßen Filtervorrichtung ist der Ionenaustauscher als synthetisches Molekularsieb ausgebildet.

Ein derartiges synthetisches Molekularsieb zeichnet sich durch eine definierte Spaltbreite bzw. Porengröße aus, die optimal auf die zu adsorbierenden Schwermetall-Ionen eingestellt werden kann. Bei starken Regenereignissen kommt das Wasser nur kurz in Kontakt mit dem Filtermedium. Bei natürlichen Zeolithen reicht diese kurze Kontaktzeit aufgrund der uneinheitlichen und stark variierenden Spaltbreiten nicht aus, um befriedigende Reinigungsergebnisse zu erzielen. Synthetische Molekularsiebe bzw. synthetischen Zeolithe sind von der Porenstruktur sehr viel regelmäßiger ausgebildet als natürliche Zeolithe. Die synthetischen Molekularsiebe haben daher eine deutlich höhere Sorptionskapazität bezüglich Schwermetall-Ionen, was zu einem deutlich besseren Reinigungsergebnis führt.

Das synthetische Molekularsieb liegt als Schüttung aus regelmäßig geformten Zeolithkörnern vor. Durch die regelmäßige Form der Zeolithkörner entsteht eine deutlich größere Oberfläche, die zur Adsorption der gelösten Schadstoffe zur Verfügung steht als bei natürlichen Zeolithen. Natürliche Zeolithe sind in der Regel eine Mischung aus Zeolithkörnern ganz unterschiedlicher Partikelgröße. Eine derartige Schüttung aus natürlichen Zeolithen hat auch einen großen Anteil an Unterkorn, das für die Wasserreinigung praktisch unbrauchbar ist, jedoch dafür sorgt, dass die Schüttung relativ dicht gepackt ist und somit auch ein sehr großes Gewicht aufweist. Eine Schüttung aus regelmäßig geformten Zeolithkörnern aus synthetischem Zeolith ist im Vergleich dazu wesentlich lockerer gepackt und besitzt demnach ein wesentlich geringeres Gewicht. Ferner ist der Strömungswiderstand bei den regelmäßig geformten Zeolithkörnern des synthetischen Molekularsiebs wesentlich geringer als bei den unregelmäßig geformten Zeolithkörnern des natürlichen Zeoliths. Dadurch ist der Druckverlust bei einem als Schüttung vorliegenden synthetischen Molekularsieb geringer und die Filtervorrichtung kann ohne Pumpe betrieben werden.

Besonders bevorzugt sind die Zeolithkörner kugelförmig ausgestaltet. Es ist jedoch auch möglich, zylinderförmige Zeolithkörner einzusetzen. Prinzipiell wäre auch eine Mischung aus kugelförmigen und zylinderförmigen Zeolithkörnern möglich.

Bei einer Weiterbildung der Erfindung weisen die Zeolithkörner eine Korngröße von 0,5mm bis 10,0mm, insbesondere 1,5mm bis 8,0mm auf.

Die Schüttung des synthetischen Molekularsiebs weist mehrere in Strömungsrichtung übereinander geschichtete Schüttlagen auf, die jeweils Zeolithkörner einer definierten Korngrößenverteilung, insbesondere Zeolithkörner mit im Wesentlichen gleicher Korngröße aufweisen, wobei die Korngröße in Strömungsrichtung von Schüttlage zu Schüttlage abnimmt. Es können also mehrere aufeinander folgende Filterstufen verwirklicht werden, die beispielsweise ganz individuell auf einen bestimmten gelösten Schadstoff, insbesondere ein bestimmtes gelöstes Schwermetall-Ion, eingestellt sind.

Zweckmäßigerweise liegt die Korngröße in der untersten Schüttlage im Bereich von 4,0mm bis 6,0mm, insbesondere ca. 5,0mm, während die Korngröße der in Strömungsrichtung darüber liegenden Schicht im Bereich von 2,0mm bis 3,0mm, insbesondere ca. 2,5mm liegt.

In besonders bevorzugter Weise ist das synthetische Molekularsieb ausgewählt aus der Gruppe bestehend aus Zeolith Typ A,

Zeolith Typ X, Zeolith Typ Y, Zeolith Typ L, synthetischer Mordenit und Zeolith Typ ZSM-5.

Bei einer Weiterbildung der Erfindung wird ein Zeolith Typ X eingesetzt, der eine Porenweite von 5Angström (5X) bis 20Angström (20X), vorzugsweise 10Angström (10X) bis 15Angström (15X), insbesondere 13Angström (13X), eingesetzt. Durch die Wahl einer geeigneten Spaltbreite der Zeolithkörner, beispielsweise 13Angström, ist es möglich, die Adsorptionswirkung ganz optimal auf die vorliegenden zu adsorbierenden Schadstoffe, insbesondere Schwermetall-Ionen, einzustellen.

Bei einer Weiterbildung der Erfindung bestehen im Falle eines aus mehreren Schüttlagen aufgebauten synthetischen Molekularsiebs alle Schüttlagen aus dem Zeolith des Typs X, wobei die Korngröße des Zeolithkorns des Typs X von Schüttlage zu Schüttlage abnimmt. Alternativ ist es möglich, dass wenigstens eine, insbesondere die in Strömungsrichtung erste Schüttlage, aus dem Zeolith X besteht und wenigstens eine weitere Schüttlage aus einem anderen Zeolithtyp der Gruppe bestehend aus Zeolith Typ A, Zeolith Typ Y, Zeolith Typ L, synthetischer Mordenit und Zeolith Typ ZSM-5 besteht. Bei einem aus mehreren Schüttlagen aufgebauten synthetischen Molekularsiebs kann also durch die Wahl unterschiedlicher Zeolith-Typen eine weitere Variationsmöglichkeit bereitgestellt werden, um eine optimale Reinigungswirkung zu erzielen.

In besonders bevorzugter Weise weist die Filtereinheit eine Aktivkohleschicht auf. Während das synthetische Molekularsieb hauptsächlich Schwermetall-Ionen und Nitrate aus dem belasteten bzw. verunreinigten Wasser herausfiltert, reinigt die Aktivkohleschicht das belastete Wasser von vorhandenen Kohlenwasserstoffen wie Mineralölen und PAK (polyzyklische, aromatische Kohlenwasserstoffe).

Zweckmäßigerweise ist die Aktivkohleschicht in Strömungsrichtung nach dem synthetischen Molekularsieb angeordnet. Bevorzugt ist die Aktivkohleschicht aus einer Schüttung aus Aktivkoks aufgebaut.

Bei einer Weiterbildung der Erfindung weist das Gehäuse einen Innenraum auf, der eine mit dem Zulauf ausgestattete untere Kammer und eine mit dem Ablauf ausgestattete obere Kammer aufweist, wobei die Filtereinheit die beiden Kammern als definiert wasserdurchlässige Trennwand trennt.

Die Filtereinheit kann als bei Bedarf auswechselbare Filterpatrone ausgestaltet sein.

In besonders bevorzugter Weise besteht die Filterpatrone aus mehreren nebeneinander angeordneten Filterelementen, die beispielsweise als Zylindersektoren ausgebildet sind. Gegenüber bekannten modularen Filtereinheiten hat dies den Vorteil, dass die Filterelemente bezogen auf den Querschnitt des Gehäuses an ihrer oberen Öffnung relativ klein gehalten sind, so dass die Wartung der Filtereinheit oder einzelner Filterelemente bzw. deren Austausch leichter und kostengünstiger erfolgen kann.

Zweckmäßigerweise ist in Strömungsrichtung vor dem synthetischen Molekularsieb ein Grobsieb, insbesondere Spaltsieb, angeordnet. Dieses Grobsieb dient zur Abfilterung grober Partikel oder sonstiger Feststoffe.

Zweckmäßigerweise ist in Strömungsrichtung vor dem Ablauf ein Feinsieb angeordnet. Dies verhindert ein Mitreißen der Zeolithkörner und/oder der Aktivkohleschüttung durch das durchströmende Wasser in den Ablauf.

Bei einer Weiterbildung der Erfindung besteht das Gehäuse zumindest teilweise aus Kunststoffmaterial, vorzugsweise Polyolefinmaterial, insbesondere Polyethylenmaterial.

In besonders bevorzugter Weise ist in Strömungsrichtung vor dem Molekularsieb ein sich im Wesentlichen über eine gesamte Eintrittsfläche des Molekularsiebs erstreckender Verteilerraum für verunreinigtes Wasser angeordnet. Dadurch wird eine gleichmäßige Anströmung des Molekularsiebs im Wesentlichen über dessen gesamte Eintrittsfläche gewährleistet.

Bevorzugte Ausführungsbeispiele der Erfindung sind in der Zeichnung dargestellt und werden im Folgenden näher erläutert. In der Zeichnung zeigen:
- Figur 1: einen schematischen Aufbau eines ersten Ausführungsbeispiels der erfindungsgemäßen Filtervorrichtung,
- Figur 2: einen Längsschnitt durch ein zweites Ausführungsbeispiel der erfindungsgemäßen Filtervorrichtung,
- Figur 3: in perspektivischer Sicht von oben einen Blick auf eines der Filterelemente der Filtervorrichtung gemäß Figur 2,
- Figur 4: ein Bauteil der Filtereinheit von Figur 2 und
- Figur 5: ein Vergleich der Sorbtionskapazitäten eines synthetischen Molekularsiebs mit einem natürlichen Zeolith.

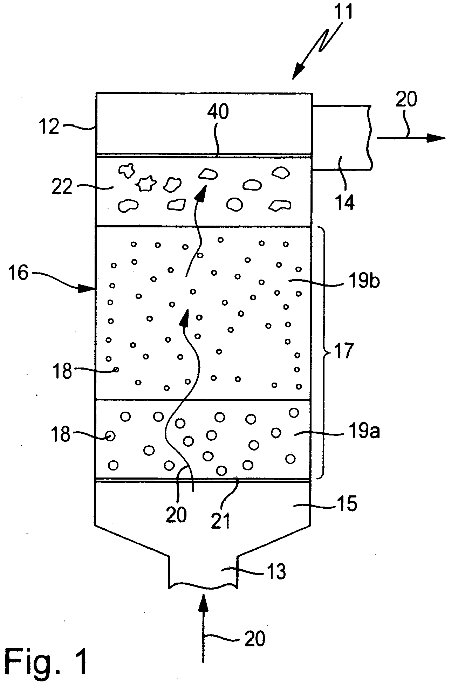

Die Figur 1 zeigt ein ersten Ausführungsbeispiel der erfindungsgemäßen Filtervorrichtung 11 zum Reinigen von mit Feststoffpartikeln und/oder gelösten Schadstoffen belastetem Wasser. Bei Wasser handelt es sich um Oberflächenwasser, beispielsweise Regenwasser, das von versiegelten Flächen, beispielsweise Straßenbelägen oder Dächern abläuft. Dieses abfließende Wasser ist mit verschiedenen Feststoffpartikeln und gelösten Schadstoffen belastet. Das abfließende Wasser wäscht dabei Brems- und Reifenabrieb und Katalysatorpartikel von Straßenbelägen ab und transportiert diese Schadstoffe mit. Ferner werden häufig noch Nährstoffe wie Phospate oder Nitrate mittransportiert. Wasser, das von Metalldächern stammt, ist mit Schwermetallen belastet, wobei hier Blei, Kupfer, Zink und Kadmium zu nennen sind.

Die erfindungsgemäße Filtervorrichtung 11 ist dazu geeignet, das verunreinigte Wasser von diesen Schadstoffen zu reinigen, so dass es anschließend im Untergrund versickert oder als Brauchwasser wiederverwendet werden kann.

Die Filtervorrichtung besitzt ein Gehäuse 12, das wenigstens einen Zulauf 13 für verunreinigtes Wasser und wenigstens einen oberhalb des Zulaufs 13 angeordneten Ablauf 14 für gereinigtes Wasser aufweist. Gemäß erstem Ausführungsbeispiel ist der Zulauf 13 als rohrförmiger Stutzen ausgebildet, der sich am Boden des Gehäuses 12 befindet. Das Gehäuse 12 besteht aus verwitterungsbeständigem, steifem Kunststoffmaterial, insbesondere Polyethylenmaterial. Der Zulauf 13 mündet in einen Verteilerraum 15 für das einströmende, verunreinigte Wasser. Der Verteilerraum 15 erstreckt sich ungefähr über die gesamte Eintrittsfläche des synthetischen Molekularsiebs 17, wodurch eine gleichmäßige Anströmung des Molekularsiebs gewährleistet ist. In Strömungsrichtung 20 zwischen dem Zulauf 13 und dem Ablauf 14 ist eine Filtereinheit 16 angeordnet, die von dem zu reinigenden Wasser im Aufstrom durchströmt wird. Die Filtereinheit 16 ist zur Innenwandung des Gehäuses hin abgedichtet, so dass keine die Filtereinheit 16 umgehende und daher nicht gereinigte Querströmungen entstehen können.

Die Filtereinheit 16 besitzt einen Ionenaustauscher in Form eines synthetischen Molekularsiebs 17. Das synthetische Molekularsieb 17 liegt als Schüttung aus regelmäßig geformten, beispielhaft kugelförmig ausgestalteten Zeolithkörnern 18 vor. Als Zeolith ist hier beispielhaft ein Zeolith des Typs X eingesetzt, der eine Spaltbreite bzw. Porenweite von 10Angström (10X) bis 15Angström (15X) aufweist. Die Korngröße der Zeolithkörner 18 liegt im Bereich von 1,5mm bis 8,0mm.

Wie beispielhaft in Figur 1 dargestellt, weist die Schüttung mehrere in Strömungsrichtung 20 übereinander geschichtete Schüttlagen 19a, 19b auf, die jeweils Zeolithkörner 18 mit im Wesentlichen gleicher Korngröße aufweisen, wobei die Korngröße in Strömungsrichtung 20 von Schüttlage 19a zu Schüttlage 19b abnimmt. In Strömungsrichtung 20 vor der untersten Schüttlage 19a ist ferner noch ein Grobsieb 21 angeordnet, das grobe Partikel oder sonstige Feststoffe, beispielsweise mitgeschwemmtes Astoder Blattmaterial, aussiebt.

Die Korngröße der Zeolithkörner 18 der untersten Schüttlage beträgt beispielsweise ca. 5,0mm, während die Korngröße der in Strömungsrichtung 20 darüber liegenden Schüttlage 19b beispielsweise ca. 2,5mm beträgt. Gemäß erstem Ausführungsbeispiel besteht sowohl die unterste Schüttlage 19a als auch die darüber liegende Schüttlage 19b jeweils aus dem Zeolith Typ X mit im Wesentlichen rundem Korn. Es ist jedoch auch möglich, dass beispielsweise die obere der beiden Schüttlagen 19a, 19b aus einem anderen Zeolith-Typ besteht, der beispielsweise ausgewählt ist aus der Gruppe bestehend aus Zeolith Typ A, Zeolith Typ Y, Zeolith Typ L, synthetischer Mordenit und Zeolith Typ ZSM-5. Die Schüttlagen 19a, 19b können beispielsweise durch ein Zwischensieb (nicht dargestellt) voneinander getrennt sein.

Oberhalb der obersten Schüttlage 19b befindet sich noch eine Aktivkohleschicht 22 aus einer Schüttung von Aktivkoks. Die Aktivkohleschicht 22 dient zum Abfiltration von Kohlenwasserstoffen aus dem verunreinigten Wasser.

Bei der Filtration wird zunächst verunreinigtes Wasser über eine geeignete Leitungsführung zum Zulauf 13 der Filtervorrichtung 11 geführt. Das verunreinigte Wasser tritt in das Filtergehäuse 12 ein und wird dort im Verteilerraum 15 verteilt. Grobe Partikel bzw. sonstige Feststoffe werden durch das Grobsieb zurückgehalten. Das verunreinigte Wasser durchströmt die Filtereinheit in Strömungsrichtung 20 von unten nach oben, also im Aufstrom, wobei das verunreinigte Wasser zunächst in die unterste Schüttlage 19a des synthetischen Molekularsiebs 17 gelangt. In dieser untersten Schüttlage 19b werden Schwermetalle und Nitrate herausgetrennt. Das synthetische Molekularsieb 17 arbeitet dabei als Ionenaustauscher. Dabei werden die im Wasser gelösten Schwermetall-Ionen durch in der Zeolith-Matrix enthaltenen Ionen ausgetauscht, wobei die Schwermetall-Ionen dann in der Matrix durch Adsorption angelagert werden. In der untersten Schüttlage 19b wird beispielsweise ein Zeolith des Typs 13X verwendet, wobei der Porendurchmesser dann 13Angström beträgt. Dadurch ist es möglich, Moleküle in ungefähr derselben Größe aus dem verunreinigten Wasser herauszutrennen. Die Schwermetall-Ionen liegen dabei nicht in freiem Zustand vor, sondern sind hydratisiert, also mit einer bestimmten Anzahl von Wassermolekülen umgeben, die die Größe des abzutrennenden Moleküls mitbestimmen. In der darüber liegenden Schüttlage 19b wird dann beispielsweise ein Zeolith desselben Typs, also des Typs X verwendet, jedoch ist hier die Porengröße geringer, beispielsweise kann sie im Bereich von 8Angström liegen, so dass hier kleinere Moleküle herausgetrennt werden können.

Nachdem das verunreinigte Wasser das synthetischen Molekularsiebs 17 durchströmt hat, gelangt es in die Aktivkohleschicht 22, in der Kohlenwasserstoffe, insbesondere Mineralöle herausgetrennt werden. Das nunmehr gereinigte Wasser gelangt dann zum Ablauf 14 und wird von dort in den Untergrund versickert oder alternativ nachfolgenden Baueinheiten, z.B. einer Zisterne, zugeführt.

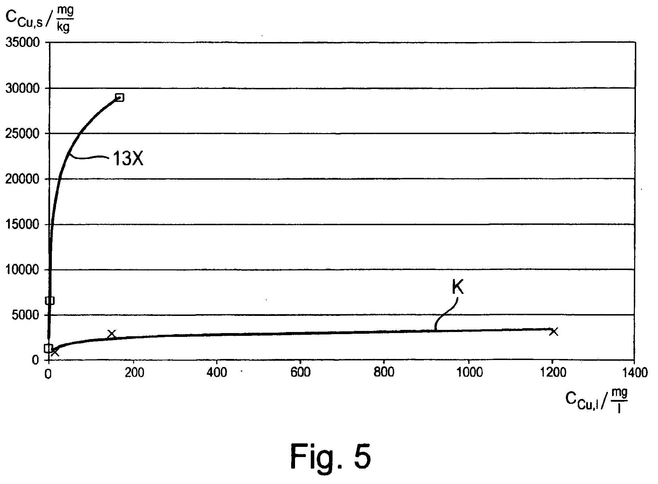

Figur 5 zeigt einen Vergleich der Sorptionskapazitäten einerseits eines synthetischen Molekularsiebs des Typs 13X und andererseits eines natürlichen Zeoliths vom Typ Klinoptilolith. Als anzulagerndes Ion wurde beispielhaft Kupfer gewählt, das beispielsweise durch von Kupferdächern abfließendes Regenwasser stammt. Das in Figur 5 dargestellte Schaubild zeigt als Abszisse die Kupfer (Cu) -Konzentration in Lösung (c_{Cu,1}) und als Ordinate die Kupfer (Cu) -Konzentration an der Festphase (c_{Cu,s}). Es ist also die Kupfer-Konzentration an der Festphase als Funktion der Kupfer-Konzentration in Lösung dargestellt. Wie im Schaubild deutlich zu erkennen, besitzt die Sorptionskurve K des natürlichen Zeoliths Klinoptilolith einen relativ flachen Verlauf, wobei eine Kupferkonzentration an der Festphase von maximal ca. 3.500mg/kg erreicht wird. Im Vergleich hierzu besitzt die Sorptionskurve 13X des synthetischen Molekularsiebs 17 einen deutlich steileren Verlauf, wobei hier bereits bei einer Kupfer-Konzentration in der Lösung von 200mg/l eine Kupfer-Konzentration an der Festphase von ca. 28.000mg/kg erreicht wird. Im Vergleich hierzu erreicht das natürliche Zeolith bei dieser Kupfer-Konzentration in Lösung gerade einmal 2.500mg/kg. Die Sorptionskapazität des synthetischen Molekularsiebs 17 ist also um ca. das zehnfache höher als die Sorptionskapazität des natürlichen Zeoliths. Die Abtrennung von Schwermetall-Ionen aus verunreinigtem Wasser ist daher mit einem synthetischen Molekularsieb 17 wesentlich effektiver als mit einem natürlichen Zeolith. Dies hängt vor allem durch die große innere Oberfläche des synthetischen Molekularsiebs zusammen, das darüber hinaus je nach Schüttlage einen einheitlichen Porendurchmesser besitzt. Die natürlichen Zeolithe hingegen sind eine Mischung aus Zeolithkörnern mit ganz unterschiedlichen Porendurchmessern, so dass die Kinetik des Ionenaustausches hier sehr viel weniger effektiv ist.

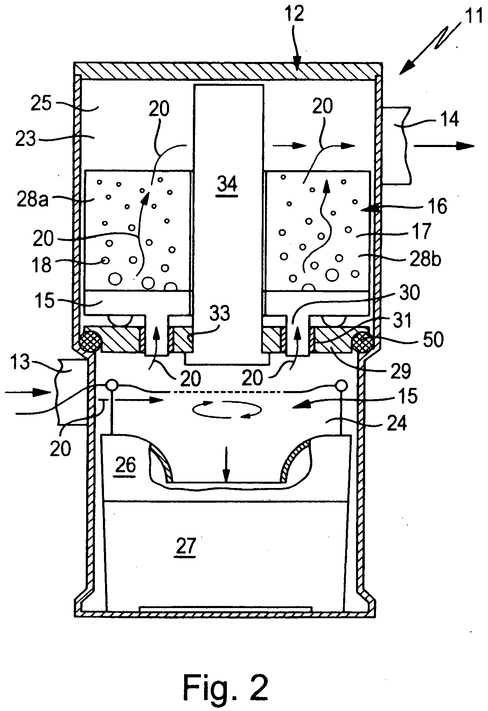

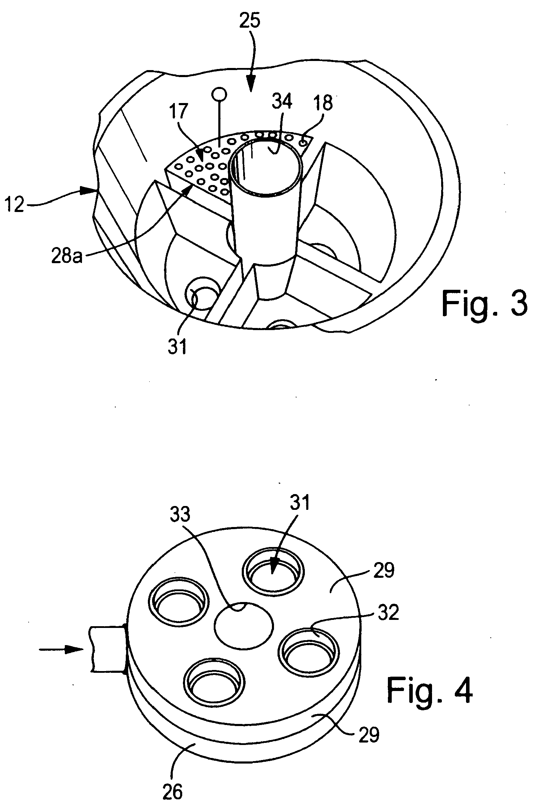

Figur 2 zeigt ein zweites Ausführungsbeispiel der erfindungsgemäßen Filtervorrichtung 11. Die Filtervorrichtung 11 besitzt ein Gehäuse 12, dessen Innenraum 23 in eine untere Kammer 24 und eine obere Kammer 25 unterteilt ist, wobei die Filtereinheit 16 als definiert wasserdurchlässige Trennwand zwischen der unteren und der oberen Kammer 24, 25 dient. Der Zulauf 13 ist hier seitlich an das Gehäuse 12 herangeführt und ist in bevorzugter Weise ebenfalls als Rohrstutzen ausgeführt. Der Wassereinlauf erfolgt hier tangential zur Innenwandung des Gehäuses 12, wobei durch die tangentiale Wassereinleitung ein Hydrozyklon erzeugt wird, wodurch eine Abscheidung von groben Feststoffpartikeln erzwungen wird. Unterhalb des Zulaufs 13 befindet sich ein Trichter 26, der mit einem Sedimentsammler 27 verbunden ist, in dem sich die groben Feststoffpartikel absetzen. In Strömungsrichtung 20 zwischen dem Zulauf 13 und dem Ablauf 14 befindet sich wiederum eine Filtereinheit 16, die mehrteilig ausgeführt und modular aufgebaut ist. Die Filtereinheit 16 besteht aus mehreren, nebeneinander angeordneten Filterelementen, von denen in Figur 2 lediglich zwei Filterelemente 28a, 28b dargestellt sind. Wie insbesondere in Figur 3 dargestellt, sind die Filterelemente 28a, 28b als Zylinder-Sektoren ausgestaltet. In diesen Zylinder-Sektoren ist dann jeweils ein synthetisches Molekularsieb 17, beispielsweise in Form der in Figur 1 gezeigten Schüttung angeordnet.

Wie beispielhaft in Figur 4 dargestellt, ist ein Sperrelement 29 vorgesehen, dass einerseits über eine Dichtung 50, beispielsweise Ringdichtung, mit der Innenwand des Gehäuses abgedichtet ist und andererseits die zylindersektorartigen Filterelemente 28a, 28b trägt. Dabei besitzen die Filterelemente 28a, 28b jeweils einen rohrförmigen Eintrittsstutzen 30, der durch einen Durchbruch 31 im Sperrelement 29 hindurch gesteckt ist. Im Durchbruch 31 befindet sich zudem noch ein Dichtelement 32, der den Eintrittsstutzen umschließt und somit für eine Dichtwirkung sorgt. Schließlich ist noch ein zentrischer Durchbruch 33 vorgesehen, durch den hindurch eine Hohlsäule 34 geführt ist, die von der unteren bis zur oberen Kammer reicht, die obere Kammer 25 durchsetzt und außerhalb des Gehäuses 12 ausmündet. Die Hohlsäule 34 dient als Überlauf, falls ein extrem starker Zulauf von verunreinigtem Wasser erfolgt. Ferner kann der Sedimentsammler 27 über die Hohlsäule 34 mit einem entsprechenden Absaugschlauch erreicht werden.

Auch hier ist ein Verteilerraum 15 vorgesehen, der in Strömungsrichtung vor dem Molekularsieb 17 angeordnet ist und sich ungefähr über die gesamte Eintrittsfläche des Molekularsiebs 17 erstreckt, wodurch eine gleichmäßige Anströmung des Molekularsiebs 17 gewährleistet ist. Zweckmäßigerweise münden die Eintrittsstutzen 30 in den Verteilerraum 15.

Wie bereits erwähnt, besitzt die Filtereinheit 16 des zweiten Ausführungsbeispiels der erfindungsgemäßen Filtervorrichtung ebenfalls ein synthetisches Molekularsieb, so dass bezüglich der Art der Abtrennung von Schwermetall-Ionen und gegebenenfalls Nitraten auf das zuvor beschriebene erste Ausführungsbeispiel verwiesen wird. Zweckmäßigerweise besitzen die Filterelemente 28a, 28b auch hier jeweils eine Aktivkohleschicht 22.

## Patentansprüche

1. Filtervorrichtung zum Reinigen von mit Feststoffpartikeln und/oder gelösten Schadstoffen belastetem Wasser, insbesondere Oberflächenwasser aus Straßen- oder Dachabläufen, mit einem Gehäuse (12), das wenigstens einen Zulauf (13) für verunreinigtes Wasser und wenigstens einen oberhalb des zulaufs (13) angeordneten Ablauf (14) für gereinigtes Wasser aufweist, wobei im Gehäuse (12) in einer Strömungsrichtung (20) des Wassers zwischen Zulauf (13) und Ablauf (14) ein Filtereinheit (16) angeordnet ist, die von dem zu reinigenden Wasser im Aufstrom durchströmt wird, und wobei die Filtereinheit (16) einen Ionenaustauscher enthält, der als synthetisches Molekularsieb (17) ausgebildet ist, **dadurch gekennzeichnet, dass** das synthetische Molekularsieb (17) als Schüttung aus regelmäßig geformten Zeolithkörnern (18) vorliegt, wobei die Schüttung mehrere in Strömungsrichtung (20) übereinander geschichtete Schüttlagen (19a, 19b) aufweist, die jeweils Zeolithkörner (18) einer definierten Korngrößenverteilung, aufweisen, wobei die Korngröße in Strömungsrichtung (20) von Schüttlage (19a) zu Schüttlage (19b) abnimmt.

2. Filtervorrichtung nach Anspruch 1, **dadurch gekennzeichnet, dass** die Zeolithkörner (18) kugelförmig ausgestaltet sind.

3. Filtervorrichtung nach Anspruch 1 oder 2, **dadurch gekennzeichnet, dass** die Zeolithkörner eine Korngröße von 0,5mm bis 10,0mm, insbesondere 1,5mm bis 8,0mm aufweisen.

4. Filtervorrichtung nach einem der vorhergehenden Ansprüche, **dadurch gekennzeichnet, dass** die Korngröße in der untersten Schüttlage (19a) im Bereich von 4,0mm bis 6,0mm, insbesondere ca. 5,0mm, liegt und die Korngröße der in Strömungsrichtung (20) darüber liegenden Schicht im Bereich von 2,0mm bis 3,0mm, insbesondere ca. 2,5mm liegt.

5. Filtervorrichtung nach einem der vorhergehenden Ansprüche, **dadurch gekennzeichnet, dass** das synthetische Molekularsieb (17) ausgewählt ist aus der Gruppe bestehend aus Zeolith Typ A, Zeolith Typ X, Zeolith Typ Y, Zeolith Typ L, synthetischer Mordenit und Zeolith Typ ZSM-5.

6. Filtervorrichtung nach Anspruch 5, **dadurch gekennzeichnet, dass** ein Zeolith Typ X, mit einer Porenweite von 5Angström (5x) bis 20Angström (20X), vorzugsweise 10Anström (10X) bis 15Angström (15X), insbesondere 13Angström (13X) eingesetzt wird.

7. Filtervorrichtung nach einem der vorhergehenden Ansprüche, **dadurch gekennzeichnet, dass** im Falle eines aus mehreren Schüttlagen (19a, 19b) aufgebauten synthetischen Molekularsiebs alle schüttlagen (19a, 19b) aus dem Zeolith des Typs X bestehen, wobei die Korngröße des zeolithkorns (18) des Typs X von Schüttlage (19a) zu Schüttlage (19b) abnimmt oder dass wenigstens eine, insbesondere die in Strömungsrichtung (20) erste Schüttlage (19a) aus dem Zeolith des Typs X besteht und wenigstens eine weitere Schüttlage (19b) aus einem anderen Zeolithtyp der Gruppe bestehend aus Zeolith Typ A, Zeolith Typ Y, Zeolith Typ L, synthetischer Mordenit und Zeolith Typ ZSM-R besteht.

8. Filtervorrichtung nach einem der vorhergehenden Ansprüche, **dadurch gekennzeichnet, dass** die Filtereinheit (16) eine Aktivkohleschicht (22) aufweist.

9. Filtervorrichtung nach Anspruch 8, **dadurch gekennzeichnet, dass** die Aktivkohleschicht (22) in Strömungsrichtung (20) nach dem synthetischen Molekularsiebs (17) angeordnet ist.

10. Filtervorrichtung nach einem der vorhergehenden Ansprüche, **dadurch gekennzeichnet, dass** das Gehäuse (12) einen Innenraum (23) aufweist, der eine mit dem Zulauf (13) ausgestattete untere Kammer (24) und eine mit dem Ablauf (14) ausgestattete obere Kammer (25) aufweist, wobei die Filtereinheit (16) die beiden Kammern (24, 25) als definiert wasserdurchlässige Trennwand trennt.

11. Filtervorrichtung nach einem der vorhergehenden Ansprüche, **dadurch gekennzeichnet, dass** die Filtereinheit (16) als bei Bedarf auswechselbare Filterpatrone ausgestaltet ist.

12. Filtervorrichtung nach Anspruch 11, **dadurch gekennzeichnet, dass** die Filterpatrone aus mehreren nebeneinander angeordneten Filterelementen (28a, 28b) besteht.

13. Filtervorrichtung nach Anspruch 12, **dadurch gekennzeichnet, dass** die Filterelemente (28a, 28b) Zylindersektoren sind.

14. Filtervorrichtung nach einem der vorhergehenden Ansprüche, **dadurch gekennzeichnet, dass** in Strömungsrichtung (20) vor dem synthetischen Molekularsieb (17) ein Grobsieb (21), insbesondere Spaltsieb, angeordnet ist.

## Claims

1. Filter device for the cleaning of water polluted by solid particles and/or dissolved pollutants, in particular surface water from road or roof drains, with a housing (12) which has at least one inlet (13) for polluted water and at least one outlet (14) for purified water, located above the inlet (13), wherein there is provided in the housing (12), in a flow direction (20) of the water between inlet (13) and outlet (14), a filter unit (16) through which the water to be purified flows upstream, and wherein the filter unit (16) contains an ion exchanger which is in the form of a synthetic molecular sieve (17), **characterised in that** the synthetic molecular sieve (17) is in the form of fill comprised of regularly shaped zeolite grains (18), wherein the fill has several fill layers (19a, 19b) layered one above the other in the flow direction (20), each having zeolite grains (18) of a defined grain size distribution, wherein the grain size reduces in the flow direction (20) from fill layer (19a) to fill layer (19b).

2. Filter device according to claim 1, **characterised in that** the zeolite grains (18) are spherical in form.

3. Filter device according to claim 1 or 2, **characterised in that** the zeolite grains have a grain size of 0.5 mm to 10.0 mm, in particular 1.5 mm to 8.0 mm.

4. Filter device according to any of the preceding claims, **characterised in that** the grain size in the bottommost fill layer (19a) lies in the range of 4.0 mm to 6.0 mm, in particular around 5.0 mm, and the grain size of the next layer above in the flow direction (20) lies in the range of 2.0 mm to 3.0 mm, in particular around 2.5 mm.

5. Filter device according to any of the preceding claims, **characterised in that** the molecular sieve (17) is chosen from the group comprised of zeolite type A, zeolite type X, zeolite type Y, zeolite type L, synthetic mordenite and zeolite type ZSM-5.

6. Filter device according to claim 5, **characterised in that** a zeolite type X with a pore size of 5angström (5x) to 20angström (20x), preferably 10angström (10x) to 15angström (15x), in particular 13angström (13x), is used.

7. Filter device according to any of the preceding claims, **characterised in that**, in the case of a synthetic molecular sieve made up of several fill layers (19a, 19b), all fill layers (19a, 19b) are of zeolite type X, wherein the grain size of the zeolite grains (18) of type X reduces from fill layer (19a) to fill layer (19b), or that at least one fill layer (19a), in particular the first in the flow direction (20), is made of zeolite type X, and at least one other fill layer (19b) is made of another zeolite type from the group comprising zeolite type A, zeolite type Y, zeolite type L, synthetic mordenite and zeolite type ZSM-R.

8. Filter device according to any of the preceding claims, **characterised in that** the filter unit (16) has an activated carbon layer (22).

9. Filter device according to claim 8, **characterised in that** the activated carbon layer (22) is provided in the flow direction (20) after the synthetic molecular sieve (17).

10. Filter device according to any of the preceding claims, **characterised in that** the housing (12) has an interior (23) which has a lower chamber (24) equipped with the inlet (13) and an upper chamber (25) equipped with the outlet (14), wherein the filter unit (16) separates the two chambers (24, 25) as a defined water-permeable partition.

11. Filter device according to any of the preceding claims, **characterised in that** the filter unit (16) is equipped as required with replaceable filter cartridges.

12. Filter device according to claim 11, **characterised in that** the filter cartridge is comprised of several filter elements (28a, 28b) arranged side by side.

13. Filter device according to claim 12, **characterised in that** the filter elements (28a, 28b) are cylinder sectors.

14. Filter device according to any of the preceding claims, **characterised in that** a coarse screen (21), in particular a slotted screen, is located in the flow direction (20) before the synthetic molecular sieve (17).

## Revendications

1. Dispositif de filtration pour le nettoyage d'eau chargée en particules solides et/ou polluants dissous, en particulier de l'eau de surface des avaloirs de chaussée ou évacuations de toit, avec un boîtier (12) qui présente au moins une amenée (13) pour de l'eau non nettoyée et au moins une évacuation (14) pour de l'eau nettoyée, agencée au-dessus de l'amenée (13), une unité de filtration (16) étant agencée dans le boîtier (12) dans un sens d'écoulement (20) de l'eau entre l'amenée (13) et l'évacuation (14), laquelle unité est parcourue par l'eau à nettoyer en courant ascendant, et l'unité de filtration (16) contenant un échangeur d'ions qui est réalisé comme un tamis moléculaire (17) synthétique, **caractérisé en ce que** le tamis moléculaire synthétique (17) se présente comme un tas de grains de zéolithe (18) formés régulièrement, le tas présentant plusieurs couches de tas (19a, 19b) posées les unes au-dessus des autres dans le sens d'écoulement (20), lesquelles présentent respectivement des grains de zéolithe (18) d'une répartition granulométrique définie, la granulométrie se réduisant dans le sens d'écoulement (20) de la couche de tas (19a) à la couche de tas (19b).

2. Dispositif de filtration selon la revendication 1, **caractérisé en ce que** les grains de zéolithe (18) sont configurés de manière sphérique.

3. Dispositif de filtration selon la revendication 1 ou 2, **caractérisé en ce que** les grains de zéolithe présentent une granulométrie de 0,5 mm à 10 mm, en particulier de 1,5 mm à 8 mm.

4. Dispositif de filtration selon l'une quelconque des revendications précédentes, **caractérisé en ce que** la granulométrie dans la couche de tas la plus basse (19a) se trouve dans la plage de 4 mm à 6 mm, en particulier s'élève à environ 5 mm et la granulométrie de la couche se trouvant dessus dans le sens d'écoulement (20) se trouve dans la plage de 2 mm à 3 mm, en particulier s'élève à environ 2,5 mm.

5. Dispositif de filtration selon l'une quelconque des revendications précédentes, **caractérisé en ce que** le tamis moléculaire synthétique (17) est sélectionné dans le groupe se composant de zéolithe de type A, type X, type Y, type L, de mordénite synthétique et de zéolithe de type ZSM-5.

6. Dispositif de filtration selon la revendication 5, **caractérisé en ce qu'**une zéolithe de type X est utilisée avec une largeur de pore de 5 angströms (5x) à 20 angströms (20X), de préférence 10 angströms (10X) à 15 angströms (15X), en particulier de 13 angströms (13X).

7. Dispositif de filtration selon l'une quelconque des revendications précédentes, **caractérisé en ce qu'**en cas de tamis moléculaire synthétique structuré de plusieurs couches de tas (19a, 19b), toutes les couches de tas (19a, 19b) se composent de la zéolithe du type X, la granulométrie du grain de zéolithe (18) du type X se réduisant de la couche de tas (19a) à la couche de tas (19b) ou **en ce qu'**au moins une, en particulier la première couche de tas (19a) dans le sens d'écoulement (20) se compose de la zéolithe du type X et au moins une autre couche de tas (19b) se compose d'un autre type de zéolithe du groupe se composant de zéolithe de type A, de type Y, de type L, de mordénite synthétique et de zéolithe de type ZSM-R.

8. Dispositif de filtration selon l'une quelconque des revendications précédentes, **caractérisé en ce que** l'unité de filtration (16) présente une couche de charbon actif (22).

9. Dispositif de filtration selon la revendication 8, **caractérisé en ce que** la couche de charbon actif (22) est agencée dans le sens d'écoulement (20) après le tamis moléculaire synthétique (17).

10. Dispositif de filtration selon l'une quelconque des revendications précédentes, **caractérisé en ce que** le boîtier (12) présente un espace intérieur (23) qui présente une chambre inférieure (24) équipée de l'amenée (13) et une chambre supérieure (25) équipée de l'évacuation (14), l'unité de filtration (16) séparant les deux chambres (24, 25) comme une paroi de séparation perméable à l'eau de manière définie.

11. Dispositif de filtration selon l'une quelconque des revendications précédentes, **caractérisé en ce que** l'unité de filtration (16) est configurée comme cartouche filtrante échangeable si besoin.

12. Dispositif de filtration selon la revendication 11, **caractérisé en ce que** la cartouche de filtration se compose de plusieurs éléments de filtration (28a, 28b) agencés l'un à côté de l'autre.

13. Dispositif de filtration selon la revendication 12, **caractérisé en ce que** les éléments de filtration (28a, 28b) sont des secteurs cylindriques.

14. Dispositif de filtration selon l'une quelconque des revendications précédentes, **caractérisé en ce qu'**un tamis grossier (21), en particulier un tamis à fentes est agencé dans le sens d'écoulement (20) avant le tamis moléculaire synthétique (17).
